# EUROPEAN PATENT SPECIFICATION

(11) **EP 2 279 312 B1**
(45) Date of publication and mention of the grant of the patent: **19.10.2011**
(21) Application number: 09722054.5
(22) Date of filing: 19.03.2009
(51) Int. Cl.: E04H 3/24, F16B 7/04

(54) **CONNECTING DEVICE BETWEEN TWO UPRIGHTS**
VERBINDUNGSVORRICHTUNG ZWISCHEN ZWEI PFOSTEN
DISPOSITIF POUR ASSEMBLER DEUX MONTANTS

(30) Priority: 20.03.2008 IT BO20080178
(43) Date of publication of application: 02.02.2011
(73) Proprietor: RS Casting S.r.l., Padova (IT)
(72) Inventor: BULGARELLI, Riccardo, I-35036 Montegrotto Terme (IT)
(74) Representative: Maccagnan, Matteo
(86) International application number: PCT/IB2009/000549
(87) International publication number: WO 2009/115900

(56) References cited:
- WO-A-96/18826
- GB-A- 1 439 159
- JP-A- 7 207 769
- US-A- 2 347 534
- US-A1- 2007 234 676

## Description

### TECHNICAL FIELD

The present invention relates to a device for joining two uprights.

### BACKGROUND ART

As is known some metal support structures such as for example the structures used for stages comprise a series of uprights and cross-members that must be joined coaxially to one another to define the desired height and the length of the span. The current method for joining two coaxial uprights envisages the use of sleeves that are fixed to the corresponding upright by means of welding. It is apparent that the use of welded joints results in a number of evident drawbacks such as the weakening of the upright in the welding zone which is thermally altered and due to which the capacity of the structure is reduced. Moreover production times are long especially when plates are used as the interconnecting members in that their geometric shape prevents the use of automated production processes. Lastly the use of welding means the structure has an extremely poor appearance.

The patent application WO-A-96/18826 discloses a device for joining two coaxial uprights comprising a first sleeve that can be fixed by means of a screw to the axial end of a first of said uprights; a second sleeve that can be fixed by means of a screw to the axial end of a second of said uprights and a metal member having a first head inside said first sleeve and a second head inside said second sleeve. However, the uprights cannot be connected/disconnected quickly and easily to/from the device according to the patent application WO-A-96/18826.

### DISCLOSURE OF INVENTION

The object of the present invention is to produce a device for joining two uprights which overcomes the drawbacks described above in that no special machining processes are required and in that it enables the structures to be assembled and dismantled simply and quickly. This objet is achieved by a device according to claim 1.

### BRIEF DESCRIPTION OF THE DRAWINGS

In order to better understand the present invention, a non-limiting preferred embodiment thereof will now be described by way of example with the help of the figures in the accompanying drawing, in which:
figure 1 is a perspective view of a trellis structure;
figure 2 is a plan view of a part of the structure of figure 1; and
figure 3 is a cross-sectional view of a part of the structure of figure 1.

### BEST MODE FOR CARRYING OUT THE INVENTION

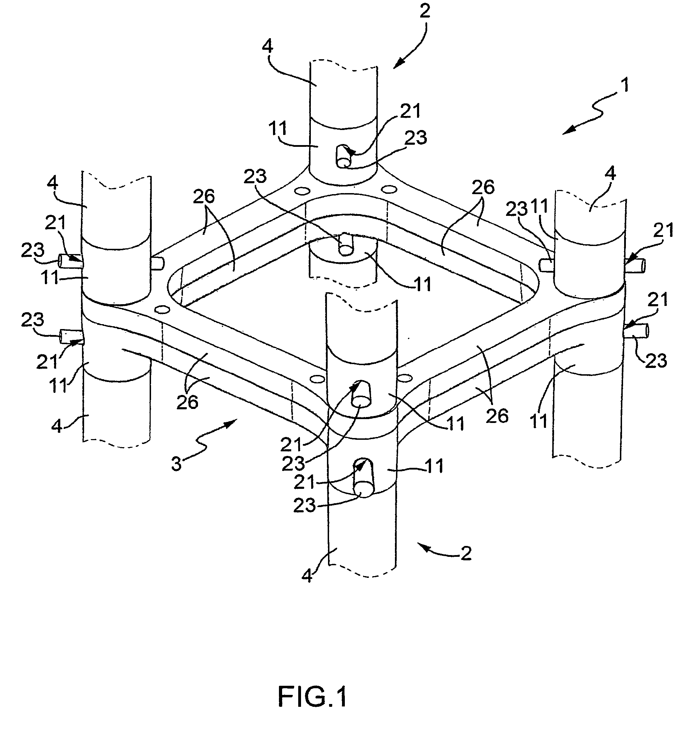

With reference to figure 1, designated as a whole by number 1 is a part of a structure defined by two metal trellises 2 arranged coaxially with respect to one another and joined to one another by means of a device 3. In this embodiment the trellises 2 comprise four vertical uprights 4 arranged at the vertices of an imaginary rectangle and a plurality of tie rods (not illustrated) arranged between contiguous pairs of uprights 4; the tie rods being welded at the ends thereof to the corresponding uprights 4.

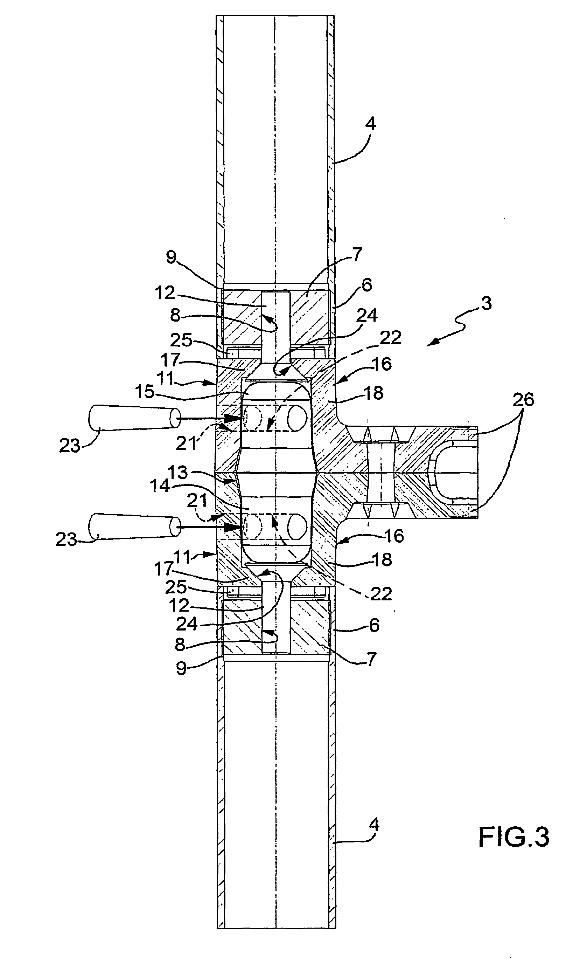

With reference to figure 3, the uprights 4 are internally hollow and have an internally threaded axial end section 6 inside which there is screwed an externally threaded cylindrical metal block 7 having a threaded central hole 8. Inside the upright 4 there is an annular shoulder 9 against which the block 7 rests. Moreover the length of the block 7 is such that the outwardly facing axial end of said block 7 is at a given distance from the end edge of the upright 4 once screwed to the end of the threaded section 6 of the upright 4.

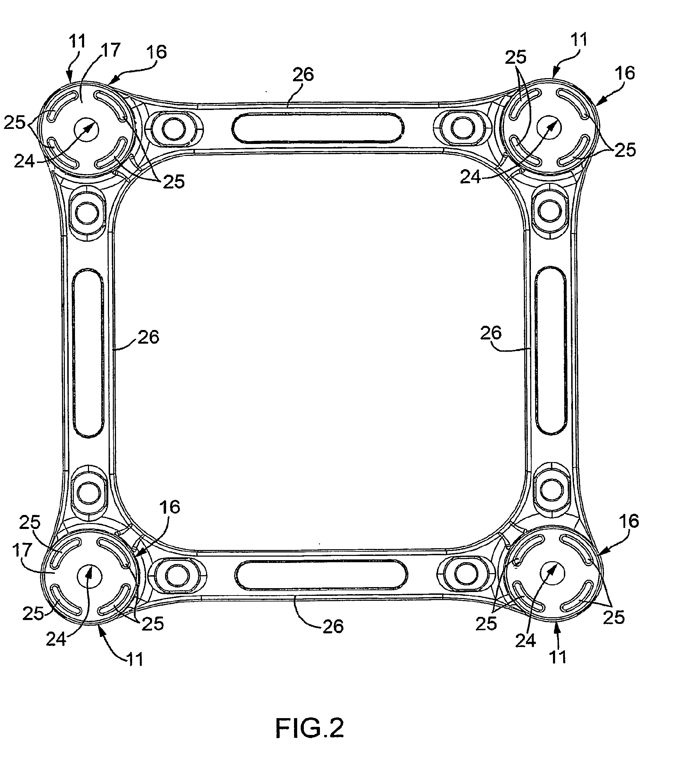

With reference to figures 1, 2 and 3, the device 3 for each pair of uprights 4 of the two trellises 2 to be joined comprises:
a first sleeve 11 fixed by means of a screw 12 to the axial end of a first upright 4 of the first trellis 2 by means of screwing the screw 12 into the hole 8 of the block 7;
a second sleeve 11 fixed by means of a screw 12 to the axial end of a first upright 4 of the second trellis 2 by means of screwing the screw 12 into the hole 8 of the block 7; and
a metal member 13 having a first head 14 inside the first sleeve 11 and a second head 15 inside the second sleeve 11.

Each sleeve 11 is defined by a cylindrical metal member 16 internally cup-shaped and coaxial to the respective upright. Preferably the outside diameter of the member 16 is the same as the outside diameter of the upright 4. The member 16 has a base wall 17 that rests against the axial end of the respective upright 4 and a cylindrical lateral wall 18 that has a diametral through hole 21 coaxial to a through hole 22 in the housed head 14 or 15. A taper pin 23 is inserted into the holes 21 and 22 in order to fix the member 13 to the sleeve 11. Preferably the length of the pin 23 is greater than the outside diameter of the member 16 so that the ends of the pin 23 remain outside the member 16. The base wall 17 has a through hole 24 through which the threaded shank of the screw 12 can be screwed into the hole 8 of the block 7; the head of the screw 12 coming to rest against the inside surface of the base wall 17. The heads 14 and 15 of the member 13 are shaped and in particular are substantially cone-shaped. Preferably the development of the inside face of the wall 18 is complementary to the development of said heads 14 and 15.

Moreover the outside surface of the base wall 17 of each sleeve 11 has a plurality of projections 25 defined along a circumference the diameter of which is smaller than the inside diameter of the upright 4. Once assembled, the projections 25 remain inside the space defined between the outwardly facing axial end of the block 7 and the end edge of the upright 4; said projections 25 being useful for centering the sleeve 11 with respect to the relative upright 4. The device 3 also comprises bars 26 that connect the sleeves 11 fitted to the uprights 4 of a same trellis 2 and which substantially form a rectangularly-shaped perimeter that is the same as the imaginary perimeter defined by the uprights 4 of a same trellis 2. Said bars 26 are preferably a one-piece construction with said sleeves 11 and can be used to support and fasten any cross-members (not illustrated) which may be part of the structure 1.

In use, first of all the blocks 7 are screwed inside the uprights 4 up to the end of the threaded section 6 and then the sleeves 11 are placed on the uprights 4 of both trellises 2 by inserting the projections 25 into the end of the upright 4. Next, the screw 12 is tightened for each sleeve 11, and lastly the head 14 is inserted into the first sleeve 11 and fixed with the pin 23. The head 15 is then inserted into the second sleeve 11 and is fixed with the pin 23 thus joining the uprights 4 of two trellises 2.

The advantages of the present invention are apparent from the above description.

In particular with the device according to the invention uprights can be joined simply and quickly and without welding. Moreover laboratory tests have found that the mechanical properties of the joining device in terms of its shearing, torsional and flexural strength are the same as or better than those of the joining systems currently in use. Lastly it is to be noted that the uprights can also be disconnected quickly and easily, making the device according to the present invention useful for itinerant structures, i.e. structures which it must be possible to assemble and dismantle fairly frequently and in a short time.

Lastly, it is clear that modifications and variations may be made to the device 3 described and illustrated herein without departing from the scope of the present invention as defined in the following claims.

## Claims

1. Device for joining two coaxial uprights (4) comprising:
a first sleeve (11) that can be fixed by means of a screw (12) to the axial end of a first of said uprights (4) ;
a second sleeve (11) that can be fixed by means of a screw (12) to the axial end of a second of said uprights (4); and
a metal member (13) having a first head (14) inside said first sleeve (11) and a second head (15) inside said second sleeve (11); and
two blocks (7), each of which has a threaded hole (8) in which said screw (12) is screwed and which can be internally housed at the axial end of a respective uprights (4);
the device is **characterized in that** each of said sleeves (11) is internally cup-shaped and comprises a base wall (17) that rests against the axial end of the respective said upright (4) and a lateral cylindrical wall (18); said base wall (17) having a first through hole (24) through which the threaded shank of said screw (12) can be screwed inside said threaded hole (8) of said block (7) and said lateral wall (18) having a second diametral through hole (21) coaxial to a third through hole (22) obtained in said housed head (14 or 15) so that a pin (23) inserted into said second (21) and third (22) holes fastens said member (13) to the respective said sleeve (11).

2. Device according to claim 1 **characterized in that** said block (7) is externally threaded and is screwed along a threaded section (6) obtained at the axial end of each of said uprights (4).

3. Device according to claim 2 **characterized in that** inside each of said uprights (4) there is an annular shoulder (9) against which the corresponding said block (7) rests; the length of said block (7) being such as to define a space between the outwardly facing axial end of said block (7) and the end edge of the corresponding said upright (4).

4. Device according to any one of the previous claims **characterized in that**, for each of said sleeves (11) projections (25) originate from said base wall (17) and extend into the axial end of the corresponding said upright (4).

5. Device according to any one of the previous claims **characterized in that** it comprises a plurality of said first sleeves (11) fixed to the axial end of uprights (4) that are part of a first trellis (2) and a plurality of second sleeves (11) fixed to the axial end of uprights (4) that are part of a second trellis (2).

6. Device according to claim 5 **characterized in that** said first sleeves (11) are joined together by means of the bars (26) and that said second sleeves (11) are joined together by means of the bars (26).

7. Device according to claim 6 **characterized in that** said bars (26) for joining said sleeves (11) are a one-piece construction therewith.

## Patentansprüche

1. Vorrichtung zum Verbinden von zwei koaxialen Pfosten (4) mit:
einer ersten Hülse (11), die mittels einer Schraube (12) an dem axialen Ende eines ersten der Pfosten (4) befestigt werden kann;
einer zweiten Hülse (11), die mittels einer Schraube (12) an dem axialen Ende eines zweiten der Pfosten (4) befestigt werden kann; und
einem Metallglied (13) mit einem ersten Kopf (14) innerhalb der ersten Hülse (11) und einem zweiten Kopf (15) innerhalb der zweiten Hülse (11); und
zwei Blöcken (7), wobei jeder ein Gewindeloch (8) aufweist, in das die Schraube (12) eingeschraubt ist und intern an dem axialen Ende des jeweiligen Pfostens (4) untergebracht sein kann;
wobei die Vorrichtung **dadurch gekennzeichnet ist, dass** jede der Hülsen (11) intern becherförmig ausgebildet ist, und eine Grundwand (17), die gegen das axiale Ende des jeweiligen Pfostens (4) ruht, sowie eine zylindrische Seitenwand (18) aufweist;
wobei die Grundwandung (17) ein erstes Durchgangsloch (24) aufweist, durch das der Gewindeschaft der Schraube (12) innerhalb des Gewindelochs (8) des Blocks (7) geschraubt sein kann, und die Seitenwand (18) ein zweites diametrales Durchgangsloch (21), koaxial zu einem dritten Durchgangsloch (22), aufweist, das in dem untergebrachten Kopf (14 oder 15) erhalten wird, so dass ein Stift (23), der in das zweite (21) und dritte (22) Loch eingesetzt ist, das Glied (13) an der jeweiligen Hülse (11) befestigt.

2. Vorrichtung nach Anspruch 1,
**dadurch gekennzeichnet,**
**dass** der Block (7) extern ein Gewinde aufweist und entlang eines Gewindeabschnitts (6), der an dem axialen Ende von jedem der Pfosten (4) erhalten wird, verschraubt ist.

3. Vorrichtung nach Anspruch 2,
**dadurch gekennzeichnet,**
**dass** innerhalb jedes der Pfosten (4) eine ringförmige Schulter (9) vorgesehen ist, gegen die der entsprechende Block (7) ruht; und die Länge des Blocks (7) derart ist, um einen Raum zwischen dem nach außen gerichteten axialen Ende des Blocks (7) und der Endkante des entsprechenden Pfostens (4) zu definieren.

4. Vorrichtung nach einem der vorstehenden Ansprüche,
**dadurch gekennzeichnet,**
**dass** für jede der Hülsen (11) Vorsprünge (25) von der Grundwandung (17) ausgehen und sich in das axiale Ende des entsprechenden Pfostens (4) erstrecken.

5. Vorrichtung nach einem der vorstehenden Ansprüche,
**dadurch gekennzeichnet,**
**dass** sie eine Mehrzahl der ersten Hülsen (11), die an dem axialen Ende der Posten (4) befestigt sind, welche Teil eines ersten Gitters (2) sind, und eine Mehrzahl von zweiten Hülsen (11), die an dem axialen Ende des Pfostens (4) befestigt sind, welche Teil eines zweiten Gitters (2) sind, aufweist.

6. Vorrichtung nach Anspruch 5,
**dadurch gekennzeichnet,**
**dass** die ersten Hülsen (11) miteinander mittels der Streben (26) verbunden sind, und dass die zweiten Hülsen (11) miteinander mittels der Streben (26) verbunden sind.

7. Vorrichtung nach Anspruch 6,
**dadurch gekennzeichnet,**
**dass** die Streben (26) zum Verbinden der Hülsen (11) damit einen einstückigen Aufbau bilden.

## Revendications

1. Dispositif pour relier deux montants coaxiaux (4), comprenant :
un premier manchon (11) qui peut être fixé à l'aide d'une vis (12) à l'extrémité axiale d'un premier desdits montants (4) ;
un deuxième manchon (11) qui peut être fixé à l'aide d'une vis (12) à l'extrémité axiale d'un deuxième desdits montants (4) ; et
un élément métallique (13) comportant une première tête (14) à l'intérieur dudit premier manchon (11) et une deuxième tête (15) à l'intérieur dudit deuxième manchon (11) ; et
deux blocs (7), dont chacun comporte un trou fileté (8) dans lequel est vissée ladite vis (12), et qui peuvent être logés intérieurement à l'extrémité axiale d'un montant respectif (4) ;
le dispositif étant **caractérisé en ce que** chacun desdits manchons (11) est intérieurement en forme de coupelle et comprend une paroi de base (17) qui repose contre l'extrémité axiale dudit montant respectif (4) et une paroi cylindrique latérale (18) ; ladite paroi de base (17) comportant un premier trou traversant (24) à travers lequel la tige filetée de ladite vis (12) peut être vissée à l'intérieur dudit trou fileté (8) dudit bloc (7), et ladite paroi latérale (18) comportant un deuxième trou traversant diamétral (21) coaxial à un troisième trou traversant (22) réalisé dans ladite tête renfermée (14 ou 15), de telle sorte qu'une broche (23) insérée dans lesdits deuxième (21) et troisième (22) trous fixe ledit élément (13) audit manchon respectif (11).

2. Dispositif selon la revendication 1, **caractérisé en ce que** ledit bloc (7) est extérieurement fileté et est vissé le long d'une section filetée (6) réalisée à l'extrémité axiale de chacun desdits montants (4).

3. Dispositif selon la revendication 2, **caractérisé en ce qu'**à l'intérieur de chacun desdits montants (4) se trouve un épaulement annulaire (9) contre lequel repose ledit bloc correspondant (7) ; la longueur dudit bloc (7) étant telle qu'elle définisse un espace entre l'extrémité axiale dirigée vers l'extérieur dudit bloc (7) et le bord d'extrémité dudit montant correspondant (4).

4. Dispositif selon l'une quelconque des revendications précédentes, **caractérisé en ce que**, pour chacun desdits manchons (11), des saillies (12) partent de ladite paroi de base (17) et s'étendent à l'intérieur de l'extrémité axiale dudit montant correspondant (4).

5. Dispositif selon l'une quelconque des revendications précédentes, **caractérisé en ce qu'**il comprend une pluralité desdits premiers manchons (11) fixés à l'extrémité axiale de montants (4) qui font partie d'un premier treillis (2) et une pluralité de deuxièmes manchons (11) fixés à l'extrémité axiale de montants (4) qui font partie d'un deuxième treillis (2).

6. Dispositif selon la revendication 5, **caractérisé en ce que** lesdits premiers manchons (11) sont reliés entre eux à l'aide des barres (26), et **en ce que** lesdits deuxièmes manchons (11) sont reliés entre eux à l'aide des barres (26).

7. Dispositif selon la revendication 6, **caractérisé en ce que** lesdites barres (26) pour relier lesdits manchons (11) sont d'une construction d'un seul tenant avec ceux-ci.
